# EUROPÄISCHE PATENTSCHRIFT

(11) **EP 0 564 800 B1**
(45) Veröffentlichungstag und Bekanntmachung des Hinweises auf die Patenterteilung: **26.07.1995**
(21) Anmeldenummer: 93103035.7
(22) Anmeldetag: 26.02.1993
(51) Int. Cl.: B29C 35/00, B29C 33/30

(54) **Einrichtung zum wahlweisen Beaufschlagen von einer oder mehreren Formen für die Kunststoffverarbeitung mit einer Flüssigkeit oder einem unter Druck stehenden Gas**
Device for selective connection of one or several moulds for plastics treatment with a fluid or a pressurised gas
Dispositif pour la connection sélèctive d'un ou plusieurs moules pour le traitement avec un fluide ou un gaz sur pression

(30) Priorität: 30.03.1992 DE 4210312
(43) Veröffentlichungstag der Anmeldung: 13.10.1993
(73) Patentinhaber: Delcroix, Jean-Louis, F-84600 Valréas (FR)
(72) Erfinder: Delcroix, Jean-Louis, F-84600 Valréas (FR)
(74) Vertreter: Rehders, Jochen, Dipl.-Ing.

(56) Entgegenhaltungen:
- DE-A- 2 808 139
- DE-A- 3 603 274
- DE-B- 1 296 333
- US-A- 3 351 978
- US-A- 3 954 363

## Beschreibung

Die Erfindung betrifft eine Einrichtung zum wahlweisen Beaufschlagen von einer oder mehreren Formen für die Kunststoffverarbeitung mit einer Flüssigkeit oder einem unter Druck stehenden Gas nach dem Oberbegriff des Anspruchs 1. Eine derartige aus der DE-A-2808139 bekannte Einrichtung dient dazu, Formen mit Dampf zu beheizen oder mit Kühlwasser zu kühlen.

Formen für die Kunststoffverarbeitung wie Spritzgußformen, Blasformen oder Extrusionsformen müssen in der Regel auf einer bestimmten Temperatur gehalten werden, die bei Spritzguß- und Blasformen ein Abkühlen des eingeführten, plastifizierten Kunststoffs und damit dessen Verfestigung bewirkt, um das geformte Teil möglichst schnell aus der Form entnehmen zu können. Die Temperatur muß so hoch sein, daß der Kunststoff die Form vollständig ausfüllt und nicht vor dem vollständigen Ausfüllen der Form "einfriert". Beim Extrudieren muß die Extrusionsform in der Regel geheizt werden, um den extrudierten Strang kontinuierlich und mit einwandfreier Oberfläche abzuführen und in einem Kühlbad abkühlen zu können. Um die sehr teuren Kunststoffverarbeitungsmaschinen möglichst effektiv einsetzen zu können, wird des weiteren gefordert, daß sich die Formen möglichst schnell auswechseln lassen, um beim Einrichten eines anderen Spritzguß- oder Blasformteils oder eines anderen Extrusionsprofils möglichst kurze Stillstandszeiten der Maschinen hinnehmen zu müssen.

Zu diesem Zweck ist es bekannt, die Anschlüsse an den Formen als Schnellkupplungen auszubilden, die sich leicht lösen lassen und so gestaltet sind, daß beim Lösen der Kupplung keine Fluid aus den Leitungen und den Formen selber austreten kann.

Da die Formen in der Regel mit Wasser gekühlt werden, kann es vorkommen, daß das Wasser über längere Zeit in den Hohlräumen der Formen verbleibt und dort zu Korrosion führt. Des weiteren sind derartige Schnellkupplungen teuer und störanfällig, so daß einfache Schnellkupplungen ohne automatischen Verschluß beim Lösen bevorzugt werden, jedoch läuft in diesem Fall beim Trennen der Kupplung das Fluid aus den Formen aus und führt zu Verschmutzungen und Korrosion an der Formaußenseite und, was sehr viel schwerwiegender ist, in den Formhohlräumen.

Wichtig ist des weiteren, um eine hohe Ausnutzung der Maschinen zu erreichen, daß die Formen sehr schnell auf die gewünschte Temperatur gelangen.

Der Erfindung liegt die Aufgabe zugrunde, eine Einrichtung zu schaffen, die bei einfachen Aufbau ein schnelles Auswechseln von Formen zu erreichen gestattet, ohne daß dabei durch in den Formen verbleibendes Fluid Korrosions- und Verschmutzungsgefahr besteht.

Ausgehend von dieser Aufgabenstellung wird bei einer Einrichtung der eingangs erwähnten Art vorgeschlagen, daß erfindungsgemäß an einer oder mehreren Formen mit wenigstens einem Paar Drei-Wege-Ventil-Elementen miteinander zwangsbewegungsgekuppelte Absperrteile des Paares Drei-Wege-Ventil-Elemente vorhanden sind, und im Ventilgehäuse und dem beweglichen Absperrteil der beiden gekuppelten Drei-Wege-Ventil-Elemente eine Kanalanordnung vorgesehen ist für eine Verbindung zwischen dem Anschluß für die Flüssigkeitszufuhr und dem mit dem Zulauf der Form verbundenen Ausgang des ersten Drei-Wege-Ventil-Elements sowie zwischen dem mit dem Ablauf der Form verbundenen Eingang und dem Anschluß für eine Flüssigkeitsableitung des zweiten Drei-Wege-Ventil-Elements in einer ersten Stellung der gekuppelten Drei-Wege-Ventil-Elemente, für eine Verbindung zwischen Druckgasanschluß und dem mit dem Zulauf der Form verbundenen Ausgang des ersten Drei-Wege-Ventil-Elements sowie zwischen dem mit dem Ablauf der Form verbundenen Eingang und dem in den Auffangbehälter mündenden Ausgang für Flüssigkeit und Druckgas des zweiten Drei-Wege-Ventil-Elements in einer zweiten Stellung der gekuppelten Drei-Wege-Ventil-Elemente und für eine Sperrung sämtlicher Anschlüsse, Eingänge und Ausgänge an den beiden Drei-Wege-Ventil-Elementen in einer dritten Stellung der beiden gekuppelten Drei-Wege-Ventil-Elemente.

Mit dieser Einrichtung läßt sich in der ersten Stufe die Beaufschlagung einer oder mehrerer Formen mit Flüssigkeit erreichen, wobei die Flüssigkeit vorzugsweise in einem geschlossenen System umlaufen kann und dabei gegebenenfalls in bekannter Weise temperiert, d. h. abgekühlt oder erwärmt wird. In der zweiten Stellung wird der Flüssigkeitskreislauf von der Form getrennt und die in der Form befindliche Flüssigkeit mit einem unter Druck stehenden Gas, in der Regel mit Druckluft ausgetrieben. Die ausgetriebene Flüssigkeit wird in einem Behälter aufgefangen, wobei die Druckluft solange durch die Form geleitet wird, bis die Form und die Leitungen vollständig trocken sind. Danach werden sämtliche Anschlüsse, Eingänge und Ausgänge abgesperrt, so daß sich die Form von den Drei-Wege-Ventil-Elementen lösen läßt, vorzugsweise mittels einfacher Schnellkupplungen, und gegen eine andere Form ausgetauscht werden kann.

Die erfindungsgemäße Einrichtung läßt sich unmittelbar in der Nähe einer oder mehrerer Formen in Spritzgießmaschinen, Blasformmaschinen oder Extrusionsmaschinen anordnen und ist so gestaltet, daß keine Bedienungsfehler auftreten können. Die erfindungsgemäße Einrichtung weist nur drei Ventilstellungen auf, eine Betriebsstellung mit Beaufschlagung der Form mit einem Fluid, vorzugweise Wasser, eine Entleerungsstellung zum Beaufschlagen der Form mit Druckluft und eine Sperrstellung, in der sich die Form bzw. Formen auswechseln läßt bzw. lassen.

Die erfindungsgemäße Einrichtung ist besonders vorteilhaft bei allen Systemen, bei denen sowohl der Flüssigkeitszulauf als auch der Flüssigkeitsablauf unter einem gewissen Druck stehen und daher die Gefahr besteht, daß die Leitungen leerlaufen, wenn die Verbindung zu einer Form gelöst wird. Bei im geschlossenen Kreislauf arbeitenden Systemen muß vermieden werden, daß Flüssigkeit austritt und Luft eintritt, um Schäden im Flüssigkeitskreislauf zu vermeiden, die insbesondere an dabei gegebenenfalls eingesetzten Temperiergeräten auftreten können. Mit der erfindungsgemäßen Einrichtung wird diese Forderung mit Sicherheit erfüllt, da in keiner Stellung der Drei-Wege-Ventil-Elemente Luft in den Kreislauf eintreten kann.

Die Drei-Wege-Ventil-Elemente können miteinander gekuppelte, drehbare Absperrteile, vorzugsweise in Form von koaxialen, kegeligen Küken aufweisen. Diese Küken können in miteinander verbundenen Ventilgehäusen oder auch in einem einheitlichen Ventilgehäuse für beide Küken angeordnet sein.

Kegelige Küken bieten den Vorteil, daß sie durch Einschleifen in ihren Sitz gut dichtend hergestellt werden können und daß in Zwischenstellungen keinerlei unerwünschte Überschneidungen der Öffnungen eintreten. Allerdings müssen die beiden Küken getrennt voneinander in ihre Sitze eingeschliffen werden und erfordern eine gewisse Federvorspannung, um gut abzudichten.

Die Absperrteile lassen sich auch als Kolbenschieberelemente ausbilden, die achsparallel oder koaxial zueinander angeordnet sein können. Kolbenschieber sind einfach aufgebaut und weisen eine durchgehende Bohrung bei koaxialer Anordnung der Kolbenschieberelemente auf, die sich einfach und genau herstellen läßt. Die Kolbenschieber selber lassen sich ebenfalls sehr genau bearbeiten, so daß sie ohne zusätzliche Dichtungen in der entsprechenden Bohrung geführt sein können, sind jedoch in dieser Ausführungsform anfällig gegen Korrosion und Verschleiß durch vom Fluid oder dem Druckgas mitgeführten Abrieb, so daß sie in dieser Form am besten bei Verwendung von Öl als Fluid und von gefilterter Druckluft geeignet sind.

Werden zusätzliche Dichtelemente an den Kolbenschieberelementen eingesetzt, sinkt die Empfindlichkeit gegen Korrosion und Verschleiß an den Kolbenschieberelementen selber, jedoch müssen die Dichtelemente von Zeit zu Zeit ausgetauscht werden.

Die Erfindung wird nachstehend anhand zweier Beispiele des näheren erläutert. In der Zeichnung zeigen:
- Fig. 1: eine schematische Draufsicht im Schnitt mit einem Paar gekuppelter Drei-Wege-Ventil-Elemente in der ersten Stellung,
- Fig. 2: eine Seitenansicht der Drei-Wege-Ventil-Elemente in der ersten Stellung,
- Fig. 3: eine schematische Draufsicht im Schnitt mit einem Paar Drei-Wege-Ventil-Elementen in der zweiten Stellung,
- Fig. 4: eine Seitenansicht der Drei-Wege-Ventil-Elemente in der zweiten Stellung,
- Fig. 5: eine schematische Draufsicht im Schnitt mit einem Paar Drei-Wege-Ventil-Elementen in der dritten Stellung,
- Fig. 6: eine Seitenansicht der Drei-Wege-Ventil-Elemente in der dritten Stellung und
- Fig. 7: eine Schnittansicht eines Paares Drei-Wege-Ventil-Elementen gemäß einer anderen Ausführungsform in der dritten Stellung.

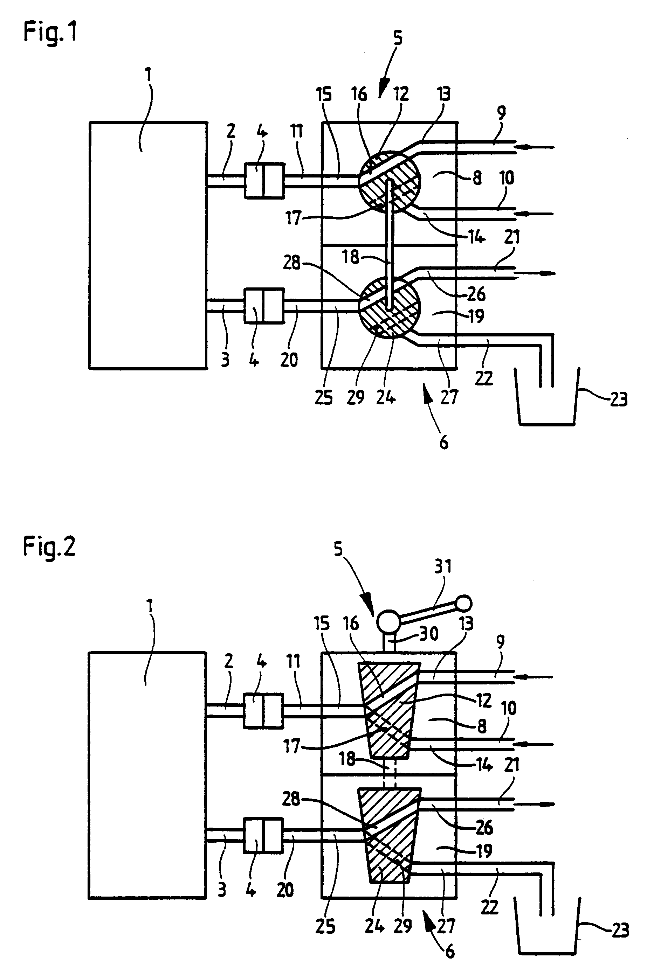

In den Fig. 1 bis 6 ist eine Form 1 mit einem Paar Drei-Wege-Ventil-Elementen 5, 6 verbunden gezeigt. Die Form weist einen Zulauf 2 und einen Ablauf 3 auf, die über Schnellkupplungen 4 mit einem Ausgang 11 des ersten Drei-Wege-Ventil-Elements 5 und einem Eingang 20 des zweiten Drei-Wege-Ventil-Elements 6 verbunden sind.

Das Drei-Wege-Ventil-Element 5 besteht aus einem Gehäuse 8, das in Fig. 1 der Einfachheit halber neben einem Gehäuse 19 für das zweite Drei-Wege-Ventil-Element 6 gezeichnet dargestellt ist. Diese Darstellungsart wurde gewählt, um die Funktionsweise in den verschiedenen Stellungen zu verdeutlichen. Tatsächlich sind die Ventilgehäuse 8, 19, wie aus Fig. 2 ersichtlich, übereinander angeordnet und miteinander verbunden, z. B. verschraubt. Es ist jedoch auch möglich, die Ventilgehäuse 8, 19 einstückig herzustellen, wenn eine Montagemöglichkeit für alle Teile der Drei-Wege-Ventil-Elemente 5, 6 gewährleistet ist.

Das Ventilgehäuse 8 weist einen Anschluß für eine Flüssigkeitszufuhr auf, z. B. für Wasser. Des weiteren ist ein Anschluß 10 für ein Druckgas, z. B. Druckluft, vorgesehen. Zentrisch im Ventilgehäuse 8 ist ein konisches Küken 12 angeordnet, zu dem ein Kanal 13 vom Anschluß 9, ein Kanal 14 vom Anschluß 10 und ein Kanal 15 vom Ausgang 11 führen. Das Küken 12 weist zwei Kanäle 16, 17 auf, von denen der Kanal 16 in der in Fig. 1 und 2 dargestellten Stellung eine Verbindung zwischen dem Wasseranschluß 9 und dem Zulauf 2 der Form 1 über die Kanäle 13, 15 und den Ausgang 11 herstellt.

Das zweite Drei-Wege-Ventil-Element 6 ist entsprechend aufgebaut und besteht aus einem Gehäuse 19 mit einem Eingang 20, der über die Kupplung 4 mit dem Ablauf 3 der Form 1 verbunden ist, einem Anschluß 21 für die Flüssigkeitsableitung und einem Ausgang 22, der in einem Auffangbehälter 23 mündet. Im Ventilgehäuse 19 ist ebenfalls ein konisches Küken 24 angeordnet, das mit dem Küken 12 mittels eines Kupplungselements 18, z. B. einer Sechskantstange, drehfest gekuppelt ist. Das Küken 24 ist in der dargestellten Stellung mit dem Eingang 20 über einen Kanal 25 und mit dem Anschluß 21 für die Flüssigkeitsableitung über einen Kanal 26 und einen Kanal 28 im Küken 24 verbunden.

Ein weiterer Kanal 29 ist nur gestrichelt dargestellt, um anzudeuten, daß dieser in der in Fig. 1 und 2 dargestellten Stellung blind an der Wandung des kegeligen Sitzes des Kükens 24 mündet. Dies gilt auch für den gestrichelt dargestellten Kanal 17 im Küken 12 des ersten Drei-Wege-Ventil-Elements 5.

Die miteinander drehfest gekuppelten Küken 12, 24 lassen sich mittels einer aus dem Ventilgehäuse 8 herausgeführten Welle 30 auf der ein Betätigungshebel 31 sitzt, in drei Stellungen drehen, von denen in Fig. 1 und 2 die erste Stellung dargestellt ist, in der die Form 1 mit Wasser über den Anschluß 9 beaufschlagt ist. Das Wasser kann über den Anschluß 21 abfließen und in nicht dargestellter Weise in einem geschlossenen Kreislauf gegebenenfalls über ein nicht dargestelltes Temperiergerät zum Anschluß 9 zurückgeführt werden. Der Druckluftanschluß 10 und der Ausgang 22, der zum Auffangbehälter 23 führt, sind in der in Fig. 1 und 2 dargestellten Stellung verschlossen.

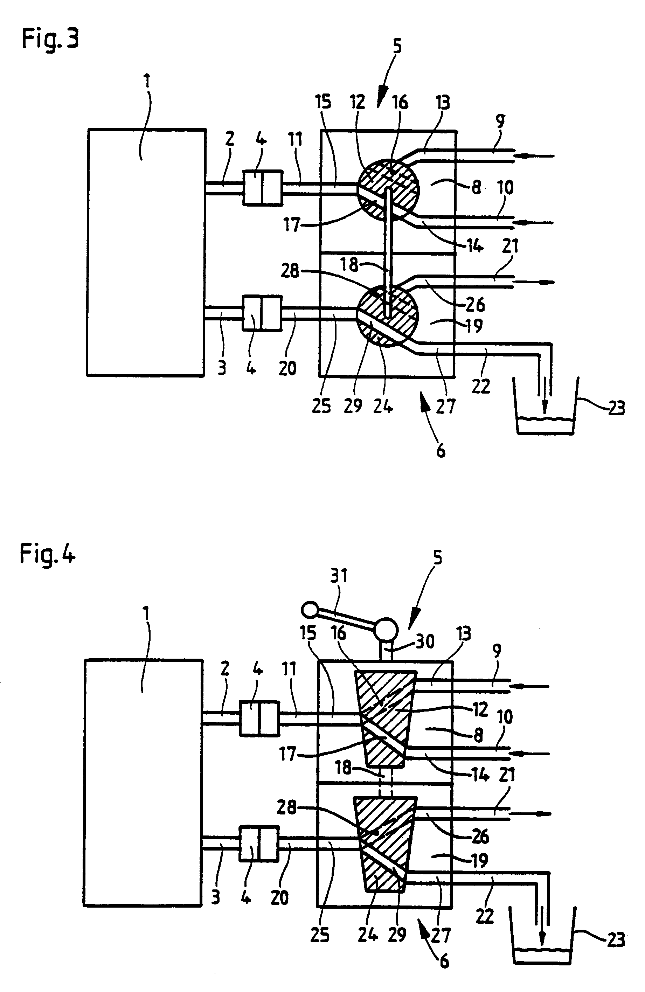

Soll die Form 1 gegen eine andere Form ausgewechselt werden, werden die Küken 12, 24 mittels des Betätigungshebels 31 gedreht und in die in Fig. 3 und 4 dargestellte Stellung gebracht. In dieser Stellung ergibt sich eine Verbindung zwischen dem Druckluftanschluß 10 und dem Ausgang 11 des ersten Drei-Wege-Ventil-Elements 5 über die Kanäle 14, 15 im Ventilgehäuse 8 und den Kanal 17 im konischen Küken 12.

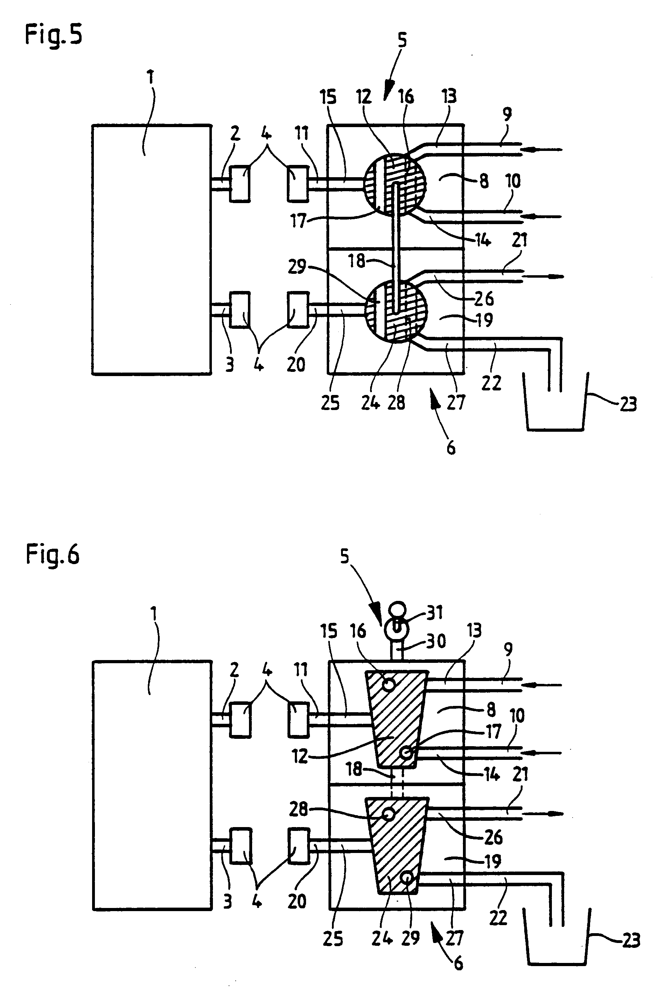

Des weiteren ergibt sich durch die Kupplung der Küken 12, 24 eine Verbindung zwischen dem Eingang 20 und dem Ausgang 22 des zweiten Drei-Wege-Ventil-Elements 6 über die Kanäle 25, 27 im Ventilgehäuse 19 und den Kanal 29 im Küken 24. In dieser Stellung wird somit Druckluft in die Form 1 geleitet und treibt das Wasser aus der Form aus. Dieses Wasser wird im Auffangbehälter 23 aufgefangen. Die in Fig. 3 und 4 dargestellte Stellung wird solange beibehalten, bis die Form durch die Druckluftbeaufschlagung vollständig getrocknet ist. Hiernach werden die Küken 12, 24 in die in Fig. 5 und 6 dargestellte Stellung gebracht, in der sämtliche Kanäle 13 bis 17 und 25 bis 29 gesperrt sind, so daß sich die Kupplungen 4 lösen lassen und die Form 1 ausgewechselt werden kann. Nachdem eine neue Form 1 über die Kupplungen 4 mit den Drei-Wege-Ventil-Elementen 5, 6 gekuppelt ist, werden die Küken 12, 24 mittels des Betätigungshebels 31 wieder in die erste in Fig. 1 und 2 dargestellte Stellung zurückgeführt, woraufhin die neue Form 1 mit Wasser beaufschlagt wird.

Es ist ersichtlich, daß sich ein Formwechsel mit der erfindungsgemäßen Einrichtung auf einfache Weise und schnell bewerkstelligen läßt und daß dabei keine Gefahr besteht, daß unnötig Wasser aus den Leitungen ausläuft und vergeudet wird, daß unnötig Druckluft verbraucht wird oder daß stromauf von den Drei-Wege-Ventil-Elementen 5, 6 angeordnete Vorrichtungen Schaden erleiden. Bedienungsfehler können bei der erfindungsgemäßen Einrichtung nicht vorkommen.

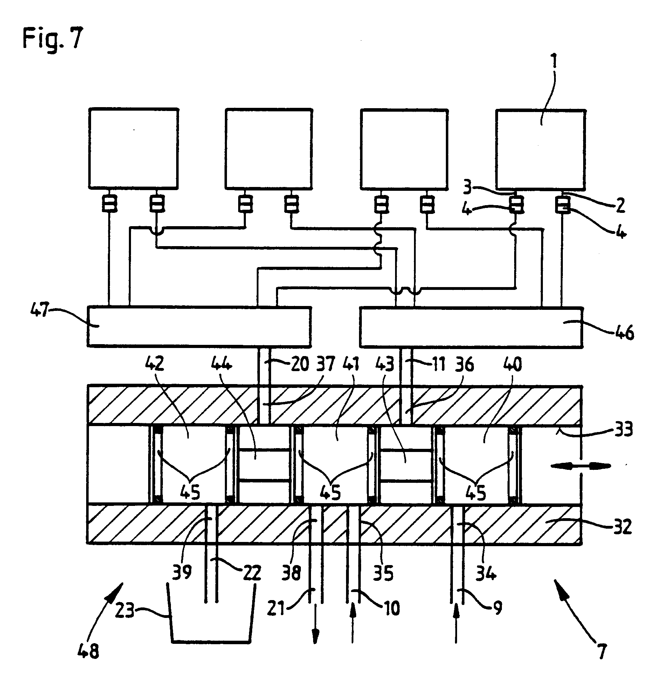

Die in Fig. 7 dargestellte Ausführungsform besteht hinsichtlich der Drei-Wege-Ventil-Elemente 7, 48 aus einem einheitlichen Ventilgehäuse 32 mit einer zylindrischen Bohrung 33, in der drei über Verbindungselemente 43, 44 kleineren Durchmessers gekuppelte Kolbenschieberteile 40, 41, 42 mittels O-Ring-Dichtungen 45 abgedichtet geführt sind. Das Ventilgehäuse 32 weist, wie die Ausführungsform gemäß Fig. 1 bis 6, einen Anschluß 9 für die Flüssigkeitszufuhr, einen Druckgasanschluß 10, einen Ausgang 11, einen Eingang 20, einen Anschluß 21 für die Flüssigkeitsableitung und einen in einen Auffangbehälter 23 mündenden Ausgang 22 auf. Der Ausgang 11 ist über einen Verteiler 46 mit vier Formen 1 verbunden ist, um darzustellen, daS sich ein Drei-Wege-Ventil-Elementen-Paar 5, 6 bzw. 7, 48 nicht nur mit einer Form 1, sondern auch mit mehreren Formen 1 verbinden läßt.

Von dem Anschluß 9 führt eine radiale Bohrung 34 zur zylindrischen Bohrung 33. Axial beabstandet dazu führt vom Druckgasanschluß 10 eine radiale Bohrung 35 zu der zylindrischen Bohrung 33. Eine weitere radiale Bohrung 36 ist etwa mittig zwischen den Bohrung 34, 35 im Gehäuse 32 angeordnet und führt von der zylindrischen Bohrung 32 zu dem Ausgang 11. Diese radialen Bohrungen 34, 35, 36 bilden in Verbindung mit benachbarten Kolbenschieberteilen 40, 41 das erste Drei-Wege-Ventil-Element 7.

Das zweite Drei-Wege-Ventil-Element 48 wird durch eine entsprechende mit dem Eingang 20 korrespondierende radiale Bohrung 37, eine mit dem Anschluß 21 für die Flüssigkeitsableitung korrespondierende radiale Bohrung 38, eine mit dem Ausgang 22 korrespondierende radiale Bohrung 39 und benachbarte Kolbenschieberteile 41, 42 gebildet. Zwischen den Kolbenschieberteilen 40, 41 sowie 41, 42 sind jeweils die Verbindungselemente 43, 44 angeordnet, die einen Ringraum freilassen.

Der Abstand der Kolbenschieberteile 40, 41, 42 und der benachbarten O-Ringdichtungen 45 ist so gewählt, daß in der in Fig. 7 dargestellten Stellung die radialen Bohrungen 34, 35, 38, 39 von den Kolbenschieberteilen 40, 41, 42 überdeckt werden, während die Bohrungen 36, 37 im Bereich des Ringraums bei den Verbindungselementen 43, 44 münden. Es ist ersichtlich, daß in der dargestellten Stellung keinerlei Verbindung zwischen den radialen Bohrungen 34 bis 39 im Ventilgehäuse 32 besteht, was der in Fig. 5 und 6 dargestellten dritten Stellung entspricht, in der alle Kanäle abgesperrt sind, so daß sich die Kupplungen 4 in den Leitungen 2, 3 der Formen 1 lösen lassen, um eine oder mehrere Formen auszuwechseln, wenn vorher mittels Druckluft alles Wasser aus den Formen 1 und den Verteilern 46, 47 ausgetrieben wurde.

In der Betriebsstellung befinden sich die Kolbenschieberteile 40, 41 mit den Verbindungselementen 43, 44 in einer so weit nach rechts verschobenen Stellung, daß sich die Kolbenschieberteile 40, 41 rechts von den radialen Bohrungen 34, 38 befinden, so daß eine Verbindung vom Anschluß 9 zum Ausgang 11 über die Bohrung 34, den Ringraum um das Verbindungselement 43 und die Bohrung 36 sowie zwischen dem Eingang 20 und dem Anschluß 21 für die Flüssigkeitsableitung über die radiale Bohrung 37, den Ringraum um das Verbindungselement 44 und die radiale Bohrung 38 ergibt. In dieser Stellung kann das am Anschluß 9 eintretende Wasser ungehindert die Formen 11 durchströmen und gelangt zum Anschluß 21 zurück, von wo es entweder in einen Tank, in einen Abfluß oder im geschlossenen Kreislauf zurück zum Anschluß 9 geleitet wird.

Um das Wasser aus den Formen auszutreiben wird Druckluft über den Anschluß 10 zugeführt, indem der Kolbenschieber 40 bis 44 so weit nach links verschoben wird, daß sich eine Verbindung zwischen den radialen Bohrungen 35, 36 über den Ringraum im Bereich des Verbindungselements 43 sowie eine Verbindung zwischen den radialen Bohrungen 37, 39 über den Ringraum im Bereich des Verbindungselements 44 ergibt. Dabei wird die Flüssigkeit aus den Formen 1 mittels der über den Anschluß 10 zugeleiteten Druckluft ausgetrieben und fließt über den Ausgang 22 in den angedeuteten Auffangbehälter 23.

Die Funktionsweise des Ventils gemäß Fig. 7 ist somit dieselbe wie die der Ausführungsform entsprechend Fig. 1 bis 6.

## Patentansprüche

1. Einrichtung zum wahlweise Beaufschlagen von einer oder mehreren Formen (1) für die Kunststoffverarbeitung mit einer Flüssigkeit oder einem unter Druck stehendem Gas mit
- wenigstens einem Paar Drei-Wege-Ventil-Elementen (5, 6, 7, 48) mit Absperrteilen (12, 24; 40 bis 44),
- einem Anschluß (9) für die Flüssigkeitszufuhr und einem Druckgasanschluß (10) sowie einem mit einem Zulauf (2) wenigstens einer Form (1) verbundenen Ausgang (11) am ersten Drei-Wege-Ventil-Element (5 bzw. 7),
- einem mit einem Ablauf (3) wenigstens einer Form (1) verbundenen Eingang (20), einem Anschluß (21) für eine Flüssigkeitsableitung und einem Ausgang (22) für Flüssigkeit und Druckgas am zweiten Drei-Wege-Ventil-Element (6 bzw. 48),
gekennzeichnet durch eine Zwangsbewegungskupplung der Absperrteile (12, 24, 40 bis 44) des Paares der Drei-Wege-Ventil-Elemente (5, 6, 7, 48)
- eine Kanalanordnung (13 - 17; 25 - 29; 34 - 39) im Ventilgehäuse (8, 19, 32) und dem beweglichen Absperrteil (12, 24, 40 - 44) der beiden gekuppelten Drei-Wege-Ventil-Elemente (5, 6; 7, 48),
- für eine Verbindung zwischen dem Anschluß (9) für die Flüssigkeitszufuhr und dem mit dem Zulauf (2) der Form (1) verbundenen Ausgang (11) des ersten Drei-Wege-Ventil-Elements (5, 7) sowie zwischen dem mit dem Ablauf (3) der Form (1) verbundenen Eingang (20) und dem Anschluß (21) für eine Flüssigkeitsableitung des zweiten Drei-Wege-Ventil-Elements (7, 48) in einer ersten Stellung der gekuppelten Drei-Wege-Ventil-Elemente (5, 6; 7, 48),
- für eine Verbindung zwischen dem Druckgasanschluß (10) und dem mit dem Zulauf (2) der Form (1) verbundenen Ausgang (11) des ersten Drei-Wege-Ventil-Elements (5, 7) sowie zwischen dem mit dem Ablauf (3) der Form (1) verbundenen Eingang (20) und dem Ausgang (22) für Flüssigkeit und Druckgas des zweiten Drei-Wege-Ventil-Elements (7, 48) in einer zweiten Stellung der gekuppelten Drei-Wege-Ventil-Elemente (5, 6; 7, 48) und
- für eine Sperrung sämtlicher Anschlüsse, Eingänge und Ausgänge (9, 10, 11; 20, 21, 22) an den beiden Drei-Wege-Ventil-Elementen (5, 6; 7, 48) in einer dritten Stellung der beiden gekuppelten Drei-Wege-Ventil-Elemente (5, 6; 7, 48).

2. Einrichtung nach Anspruch 1, **dadurch gekennzeichnet**, daß die Drei-Wege-Ventil-Elemente (5, 6) miteinander gekuppelte, drehbare Absperrteile (12, 24) aufweisen.

3. Einrichtung nach Anspruch 2, **dadurch gekennzeichnet**, daß die Absperrteile aus koaxialen, kegeligen Küken (12, 24) bestehen.

4. Einrichtung nach Anspruch 2 oder 3, **gekennzeichnet durch** miteinander verbundenen Ventilgehäuse (8, 19) für jedes Absperrteil (12, 24).

5. Einrichtung nach Anspruch 2 oder 3, **gekennzeichnet durch** ein einheitliches Ventilgehäuse (32) für zwei Absperrteile (40 - 44).

6. Einrichtung nach Anspruch 1, **gekennzeichnet durch** als Kolbenschieberelemente (40 - 44) ausgebildete Absperrteile.

7. Einrichtung nach Anspruch 6, **dadurch gekennzeichnet**, daß die Kolbenschieber (40 - 44) der beiden gekuppelten Drei-Wege-Ventil-Elemente (7, 48) koaxial angeordnet sind.

## Claims

1. Device for selective application of one or several forms (1) for processing synthetic material with a liquid or a gas under pressure with
- at least one pair of three-way valve elements (5, 6, 7, 48) with shut-off sections (12, 24; 40 to 44),
- a connection (9) for supply of liquid and a pressurized-gas connection (10) and with an outlet (11), connected to an intake (2) of at least one form (1), on a first three-way valve element (5 or 7),
- an intake (20) connected to an outlet (3) of at least one form (1), a connection (21) for an outlet for liquid and an outlet (22) for liquid and pressurized-gas on a second three-way valve element (6 and/or 48),
wherein there is forced movement coupling of a shut-off section (12, 24, 40 to 44) of a pair of three-way valve elements (5, 6, 7, 48)
- of a channel arrangement (13-17; 25-29; 34-39) in a valve housing (8, 19, 32) and a movable shut-off section (12, 24, 40-44) of both three-way valve elements (5, 6; 7, 48),
- for a connection between a connection (9) for a liquid supply and an outlet (11) of a first three-way valve element (5, 7) connected to an intake (2) of a form (1) and, between an input (20) connected to an outlet (3) of a form (1) and a connection (21), for an outlet for liquid from a second three-way valve element (7, 48), in a first position of connected three-way valve elements (5, 6; 7, 48),
- for a connection between a pressurized-gas connection (10) and an outlet (11) of a first three-way valve element (5, 7), connected to an intake (2) of a form (1) and also, between an inlet (20) connected to an outlet (3) of a form (1) and an outlet (22), for liquid and pressurized-gas of a second three-way valve element (7, 48) in a second position of connected three-way valve elements (5, 6; 7, 48) and
- for a shut-off means of all connections, inlets and outlets (9, 10, 11; 20, 21, 22) and both three-way valve elements (5, 6; 7, 48) in a third position of both connected three-way valve elements (5, 6; 7, 48).

2. Device in accordance with claim 1, wherein three-way valve elements (5, 6) have rotating shut-off sections (12, 24) which are connected to each other.

3. Device in accordance with claim 2, wherein shut-off sections comprise coaxial wedge-shaped valves (12, 24).

4. Device in accordance with claim 2 or 3, wherein there are valve housings (8, 19), for each shut-off section (12, 24), which are connected to each other.

5. Device in accordance with claim 2 or 3, wherein there is a single-bodied valve-housing (32) for two shut-off sections (40-44).

6. Device in accordance with claim 1, wherein there are sleeve valve elements (40-44) developed as shut-off sections.

7. Device in accordance with claim 6, wherein sleeve valves (40-44) of both connected three-way valve elements (7, 48) are coaxially disposed.

## Revendications

1. Dispositif destiné à alimenter au choix un ou plusieurs moules (1) pour le traitament des matières plastiques, avec un liquide ou un gaz sous pression comportant
- au moins une paire de trois éléments à vanne de distribution à trois voies (5, 6, 7, 48) avec des organes d'arrêt (12, 24 ; 40 à 44),
- un branchement (9) pour l'arrivée du liquide et un branchement de gaz sous pression (10) ainsi qu'une sortie (11), reliée à une alimentation (2) d'au moins un moule (1), sur le premier élément à vanne de distribution à trois voies (5 ou 7),
- une entrée (20) reliée à une évacuation (3) d'au moins un moule (1), un branchement (21) pour un départ de liquide et une sortie (22) pour le liquide et le gaz sous pression sur le deuxième élément à vanne de distribution à trois voies (6 ou 48),
caractérisé par un accouplement à déplacement forcé des organes d'arrêt (12, 24, 40 à 44) de la paire des éléments à vanne de distribution à trois voies (5, 6, 7, 48),
- un ensemble de canaux (13 à 17 ; 25 à 29 ; 34 à 39) dans le boîtier de vanne (8, 19, 32) et l'organe d'arrêt mobile (12, 24, 40 à 44) des deux éléments à vanne de distribution à trois voies (5, 6 ; 7, 48) accouplés,
- pour une liaison entre le branchement (9) pour l'arrivée de liquide et la sortie (11), reliée à l'alimentation (2) du moule (1), du premier élément à vanne de distribution à trois voies (5, 7), ainsi qu'entre l'entrée (20), reliée à l'évacuation (3) du moule (1), et le branchement (21) pour un départ de liquide du deuxième élément à vanne de distribution à trois voies (7, 48), dans une première position des éléments à vanne de distribution à trois voies (5, 6 ; 7, 48) accouplés,
- pour une liaison entre le branchement de gaz sous pression (10) et la sortie (11), reliée à l'alimentation (2) du moule (1), du premier élément à vanne de distribution à trois voies (5, 7) ainsi qu'entre l'entrée (20), reliée à l'évacuation (3) du moule (1) et la sortie (22) pour la liquide et le gaz sous pression du deuxième élément à vanne de distribution à trois voies (7, 48), dans une deuxième position des éléments à vanne de distribution à trois voies (5, 6 ; 7, 48) accouplés et
- pour une fermeture de tous les branchements, entrées et sorties (9, 10, 11 ; 20, 21, 22) sur les deux éléments à vanne de distribution à trois voies (5, 6 ; 7, 48), dans une troisième position des deux éléments à vanne de distribution à trois voies (5, 6 ; 7, 48) accouplés.

2. Dispositif salon la revendication 1, caractérisé en ce que les éléments à vanne de distribution à trois voies (5, 6) comportent des organes d'arrêt (12, 24) tournants, accouplés entre eux.

3. Dispositif selon la revendication 2, caractérisé en ce que les organes d'arrêt sont constitués de boisseaux (12, 24) coniques, coaxiaux.

4. Dispositif selon la revendication 2 ou 3, caractérisé par des boîtiers de vanne (8, 19) reliés entre eux pour chaque organe d'arrêt (12, 24).

5. Dispositif selon la revendication 2 ou 3, caractérisé par un boîtier de vanne (32) unique pour deux organes d'arrêt (40 à 44).

6. Dispositif selon la revendication 1, caractérisé par des organes d'arrêt conçus sous la forme d'éléments de robinet à piston (40 à 44).

7. Dispositif selon la revendication 6, caractérisé en ce que las robinets à piston (40 à 44) des deux éléments à vanne de distribution à trois voies (7, 48) accouplés, sont disposés coaxialement.
